# EUROPÄISCHE PATENTSCHRIFT

(11) **EP 0 333 648 B1**
(45) Veröffentlichungstag und Bekanntmachung des Hinweises auf die Patenterteilung: **18.05.1994**
(21) Anmeldenummer: 89810119.1
(22) Anmeldetag: 16.02.1989
(51) Int. Cl.: B62B 3/04, B65H 49/38

(54) **Verfahren und Vorrichtung zum Transportieren und Manipulieren von schweren Lasten**
Method and device for transporting and manipulating heavy loads
Méthode et dispositif pour transporter et manipuler des charges lourdes

(30) Priorität: 16.03.1988 CH 990/88
(43) Veröffentlichungstag der Anmeldung: 20.09.1989
(73) Patentinhaber: SFT AG Spontanfördertechnik, CH-8570 Weinfelden (CH)
(72) Erfinder: Stauber, Hans-Ulrich, CH-8624 Grüt (CH)
(74) Vertreter: Frei, Alexandra Sarah

(56) Entgegenhaltungen:
- DE-A- 1 925 603
- DE-A- 2 716 624
- DE-A- 3 300 912
- DE-A- 3 426 556
- GB-A- 758 223
- US-A- 4 344 368

## Beschreibung

Die Erfindung betrifft eine Transportkombination zum Transportieren von schweren Lasten, insbesondere von Druckproduktewickeln, unter Verwendung eines Flurförderers, gemäss dem Oberbegriff des Patentanspruchs 1, eine Transportvorrichtung gemäß dem Oberbegriff des Patentanspruchs 16 sowie ein Verfahren zur Erstellung der Transportkombination gemäss dem Oberbegriff des Patentanspruchs 26

Pratzenfahrzeuge und andere Flurförderer sind wegen ihrer universellen Einsatzmöglichkeit im innerbetrieblichen Transportwesen sehr verbreitet. Die Flexibilität, welche durch sie geschaffen wird, schafft das Bedürfnis, solche Flurförderer zu allen möglichen Zwecken einzusetzen. Hier erweist es sich, dass solchen Fahrzeugen aber durch Rahmenbedingungen der Konstruktionsweise, bspw. Antriebsart, Tragfähigkeit, Fahrstabilität, etc., Grenzen gesetzt sind. Dabei zeigt sich, dass insbesondere beim Transport schwerer Lasten von 2 Tonnen und mehr Probleme bei der Fahr- und Manipulationsstabilität auftreten. Solchen Schwierigkeiten wurde bisher durch eine massive und teure Bauweise der Transportfahrzeuge Rechnung getragen oder es mussten Spezialfahrzeuge entwickelt werden. Eine robustere Bauweise führt aber zu neuen Problemen, da solche schweren Fahrzeuge, abgesehen von den hohen Herstellungs- und Betriebskosten, ihrerseits weniger wendig und lenkbar und damit weniger flexibel im Einsatz sind.

Sollen dennoch schwere Lasten mittels Flurförderern transportiert werden, so werden auch Stapler mit Zusatzgeräten verwendet, welche Lastwagenanhänger oder andere Anhänger ankuppeln können. Diesem Konzept haftet aber das bekannte Problem der erschwerten Manövrierbarkeit drei- oder mehrachsiger Fahrzeuge an, so dass die oft geforderte Wendigkeit in engen Lagerverhältnissen nicht erreicht wird. Da im betrieblichen Einsatz ausserdem sehr kurze Be- und Entladezeiten gefordert sind, ist das Montieren einer Zusatzvorrichtung, die bei Verwendung des Flurförderers für andere Zwecke wieder entfernt werden muss, unerwünscht und hinderlich.

Weiter sind Kombinationen von Transportfahrzeugen mit Hubvorrichtungen und fahrbaren Lastenträgern (ein- oder mehrachsig) bekannt, bei denen die Last nur teilweise auf den Hubelementen des Transportfahrzeuges abgestützt ist. Diese bekannten Kombinationen sind mindestens dreiachsig und entweder gelenkig mit zwei starren Radpaaren und mindestens einem lenkbaren Radpaar (zum Beispiel wie beschrieben in GB-758223 oder DE-1925603) oder sie sind steif und haben nur ein starres Radpaar (zum Beispiel beschrieben in DE-3300312 oder DE-3426556). Alle diese Transportkombinationen sind bedingt durch die Dreiachsigkeit schwer manövrierbar.

Es ist nun die Aufgabe der Erfindung, eine Transportkombination zum Transport von schweren Lasten anzugeben, die ein herkömmliches Transportfahrzeug, insbesondere ein Pratzenfahrzeug, und eine die Last tragende Transportvorrichtung aufweist, wobei die beiden Bestandteile derart aufeinander abgestimmt und relativ zueinander angeordnet sind, dass eine möglichst leicht manövrierbare, stabile Transportkombination entsteht, die eine hohe Wendigkeit aufweist und schnell und einfach gebildet und wieder aufgelöst werden kann. Ferner ist es die Aufgabe der Erfindung, ein Verfahren zur Erstellung einer derartigen Transportkombination sowie eine Transportvorrichtung aufzuzeigen.

Diese Aufgabe wird gelöst durch die Transportkombination, Transportvorrichtung und das Verfahren zu deren Erstellung, wie sie durch die Patentansprüche definiert sind.

Die Transportvorrichtung für die erfindungsgemässe Transportkombination besitzt mindestens eine Lastachse mit Radern oder Rollen. Durch geeignetes Anheben mittels Pratzen des Transportfahrzeugs wird die Vorrichtung in eine Lage gebracht, in der sie nur noch auf einer Transportlastachse ruht. Indem das Transportfahrzeug erfindungsgemäss mit der Transportvorrichtung zusammenwirkt, ist es möglich, herkömmliche Pratzenfahrzeuge für den Transport schwerer Lasten einzusetzen. Die Lastachse der Vorrichtung trägt einen Teil der Last mit, so dass selbst für sehr schwere Druckproduktewickel und andere Lasten normal dimensionierte Fahrzeuge eingesetzt werden können. Da die Kraftübertragung auf die Pratzen des Fahrzeugs im Bereich des Fahrzeugchassis erfolgt, sind die Bockrollen nur schwach belastet, was deren Rollwiderstand relativ gering hält und insbesondere bei Bodenunebenheiten von Vorteil ist.

Die Möglichkeit schwere Lasten mittels herkömmlichen Pratzenfahrzeugen zu transportieren eröffnet neue Möglichkeiten in der Lagerbewirtschaftung, insbesondere bei engen Lagerverhältnissen.

Anhand nachfolgender Figuren sind Ausführungsbeispiele der Erfindung näher erläutert.
- Fig. 1: zeigt eine erfindungsgemässe Transportkombination mit zwei auf Achsstummeln gelagerten Lasträdern in Ruhestellung.
- Fig. 2: zeigt die erfindungsgemässe Transportkombination nach Anheben der Pratzen des Transportfahrzeugs bereit zum Transport.
- Fig. 3A-3C: zeigen eine Transportvorrichtung mit vier Rädern und einer Haltevorrichtung für Druckprodukte-Wickel.
- Fig. 4A/4B: zeigen eine Vorrichtung zum Festkoppeln einer Transportvorrichtung an einem Pratzenfahrzeug.
- Fig. 5: zeigt schematisch ein Ausführungsbeispiel einer Transportvorrichtung mit Rampen für die Bockrollen.
- Fig. 6: zeigt ein Ausführungsbeispiel der Vorrichtung mit einer Transporthalterung für zwei Druckprodukte-Wickel.

Als Transportfahrzeug eignen sich insbesondere herkömmliche Pratzenfahrzeuge, die wegen ihrer Bauweise für den Transport schwerer Lasten geeignet sind. Zudem erlauben es die langen Pratzen auch, lange Transportvorrichtungen zu verwenden, wie diese beispielsweise für Druckproduktewickel, welche bis zu zwei und mehr Meter Durchmesser aufweisen, notwendig sind. Selbstverständlich können in entsprechender Weise auch andere Flurförderer zur Anwendung kommen.

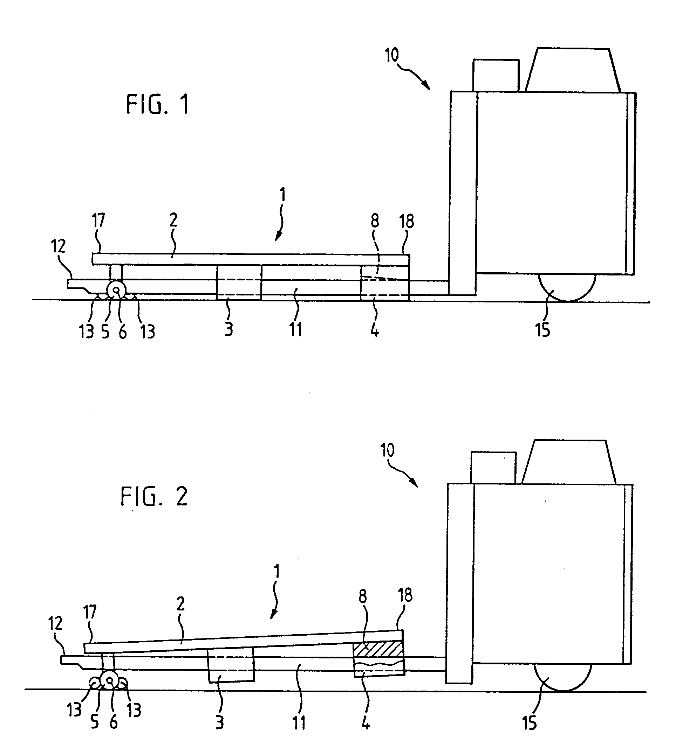

Figur 1 zeigt ein erstes, einfaches Ausführungsbeispiel der Vorrichtung. Die Transportvorrichtung ist als Palette 1 ausgeführt und enthält eine Plattform 2 und zwei parallel zu den Schmalseiten (senkrecht zur Zeichnungsebene) verlaufende, fest mit dieser verbundene Auflageelemente 3, 4. Zwei seitliche Rollen 5, von denen in dieser Seitenansicht nur eine sichtbar ist, sind im Bereich einer ersten Palettenschmalseite 17 je auf einem Achsstummel 6, die auf einer gemeinsamen Achslinie liegen, gelagert. Die Auflageelemente 3, 4 weisen in Längsrichtung Durchgänge für die Pratzen 11 auf. An der den Rollen 5 gegenüberliegenden Palettenschmalseite 18 ist mindestens ein Hubelement 8 vorgesehen unter welchem die Pratzen 11 des Transportfahrzeugs 10 durchgeführt werden können. Das Transportfahrzeug 10, vorzugsweise ein handelsübliches Pratzenfahrzeug, ist von rechts an die Palette 1 herangeführt und die Pratzen 11 unter die Palette eingefahren. Werden die Pratzen 11 an ihren freien Enden 12 angehoben, so kommen die Hubelemente 8 zur Auflage auf die Pratzen 11 und die Palette 1 wird an dieser Schmalseite 18 angehoben. Vorzugsweise sind die Pratzen des Fahrzeugs durch die Auflageelemente und/oder die Hubelemente 8 geführt und allenfalls durch hier nicht näher dargestellte Kupplungselemente mit diesen gekoppelt, so dass Palette und Fahrzeug während dem Transport eine starre Einheit bilden. Die Hubelemente in dieser Ausführungsvariante sind an ihrer Unterseite leicht angeschrägt, so dass in Transportstellung eine möglichst grosse Auflagefläche erzielt wird. Damit die Manövrierbarkeit dieser Einheit nicht eingeschränkt ist, müssen die Bockrollen-Achsen des Pratzenfahrzeugs ebenfalls mit den Achsen 6 der Rollen 5 zusammenfallen oder sehr nahe bei diesen Achsen 6 liegen. Um diese gegenseitige Position von Fahrzeug und Palette zu gewährleisten kann ein Anschlag an der Palette 1 und/oder am Fahrzeug 10 vorgesehen sein.

Das Prinzip der Erfindung ist darin zu sehen, dass die Kombination von Flurförderer und Transportvorrichtung in Transportstellung faktisch nur zwei Achsen (Achsen der Räder 15 sowie die Achsen 6 und 13, welche nahezu auf einer Achslinie liegen) aufweist, wobei die Transportvorrichtung selber während dem Transport der Lasten nur noch auf einer tragenden Achse [Transportlastachse] gelagert ist. Dabei wird angestrebt, dass durch eine günstige Gewichtsverteilung der zu transportierenden Last sowie einer entsprechenden Bauweise der Transportvorrichtung auch bei schweren Lasten eine problemlose Manövrierfähigkeit erhalten bleibt. Dazu muss einerseits die Transportvorrichtung entsprechend konstruiert sein und andererseits Transportfahrzeug und diese Vorrichtung verfahrensgemäss zueinander angeordnet und bewegt werden. Die Stabilisierung der Transportvorrichtung wird durch den Flurförderer übernommen, bzw. weitere Auflagepunkte (Lastpunkte) durch letzteren gebildet. Dadurch werden gleichzeitig in einfachster Weise mehrere Vorteile erreicht. Da die erfindungsgemässe Vorrichtung nur eine Transportlastachse aufweist, ist es möglich die Vorrichtung zu verschwenken ohne dass die entsprechenden Räder oder Rollen einen Verstellwinkel aufweisen bzw. als Schwenkrollen ausgeführt sein müssten. Grundsätzlich kann eine solche Vorrichtung mit einer Schubkarre verglichen werden, die nach Anheben an den Traggriffen ebenfalls nur noch eine Lastachse mit einem Rad aufweist. Der Auflagepunkt des Rades entspricht hier dem Dreh- bzw. Verschwenkpunkt. Auch bei schwerer Beladung ist der auftretende Reibungswiderstand so klein, dass ein problemloses Schwenken möglich ist.

Aus Figur 2 kann man erkennen, dass das Gewicht einer angehobenen Palette auf den Rollen 5 der Palette und auf den Bockrollen 13 sowie über den Auflagepunkt der Hubelemente 8 auf den Rädern 15 des Transportfahrzeugs 10 lastet. Dadurch wird eine optimale Gewichtsverteilung und hohe Stabilität beim Transport erreicht. Einerseits wird eine beladene Palette an ihrer Aussenseite angehoben, so dass die Kräfteverteilung im allgemeinen zu einer relativ kleinen notwendigen Hubkraft führt, andererseits der Auflagepunkt der Palette im Bereich der Mitte zwischen den beiden Lastachsen liegt, so dass eine hohe Stabilität erreicht wird. Dies ist ein grosser Vorteil gegenüber Verfahren wie bspw. die eingangs genannten, bei denen mit einem Gabelstapler ein Anhänger angehoben wird und demzufolge bei schweren Lasten ein grosses Drehmoment auf den Stapler wirkt.

Wie leicht aus den Figuren 1 und 2 ersichtlich ist, bedarf ein Anheben einer solchen Palette zum Transport einen relativ grossen Hub um eine hinreichende Bodenfreiheit zu erzielen. Selbstverständlich würde eine Verkürzung der Auflageelemente 3, 4 eine Verbesserung bringen, doch ist bei einer üblichen Konstruktionsweise der Palette aus Holz diese Möglichkeit wegen deren Tragfestigkeit eingeschränkt. Aus diesem Grunde werden gemäss der Erfindung vorzugsweise höhenverstellbare Rollen 5 an der Transportvorrichtung vorgesehen. Dazu sind die Rollen 5 bspw. an bezüglich dem Rahmen in einer Vertikalebene verschwenkbaren Stützen gelagert. Eine solche Verstellmöglichkeit erlaubt es gleichzeitig, dass die Palette im Ruhezustand nicht auf den Rollen aufliegt, sondern letztere erst aktiviert werden, wenn die Pratzen unter die Palette eingeführt werden. Dies ist beispielsweise dann von Vorteil, wenn die Palette nicht nur erfindungsgemäss transportiert werden soll, sondern auch über Rollbahnen bewegt werden muss. Mittels einer Sensoreinrichtung kann vorgesehen werden, dass die Rollen automatisch in Transportposition geschwenkt oder abgesenkt werden, sobald das Transportfahrzeug mit seinen Bockrollen präzise ausgerichtet ist.

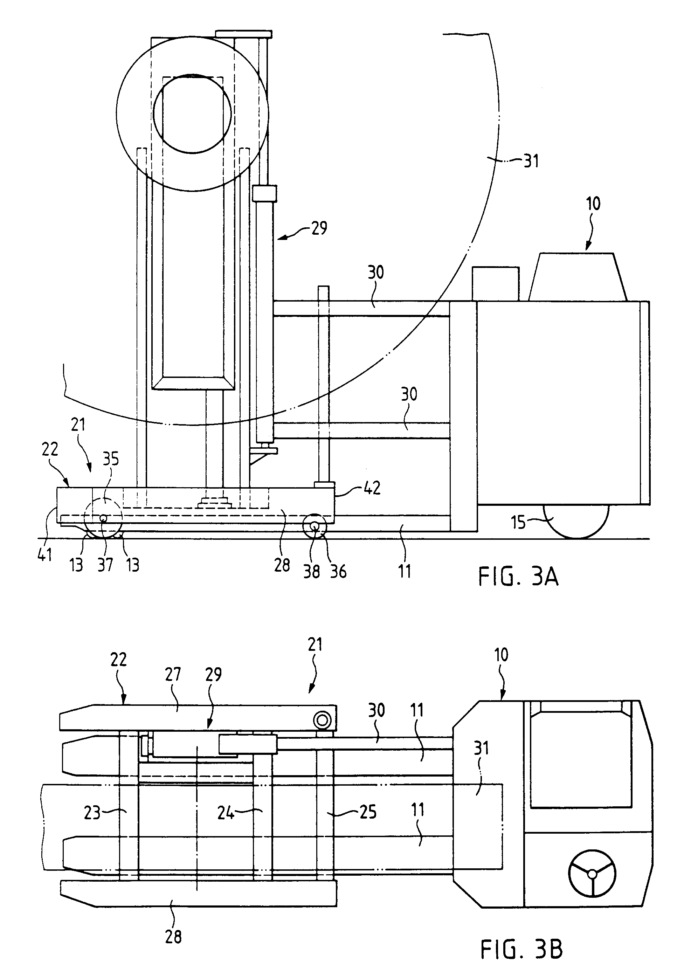

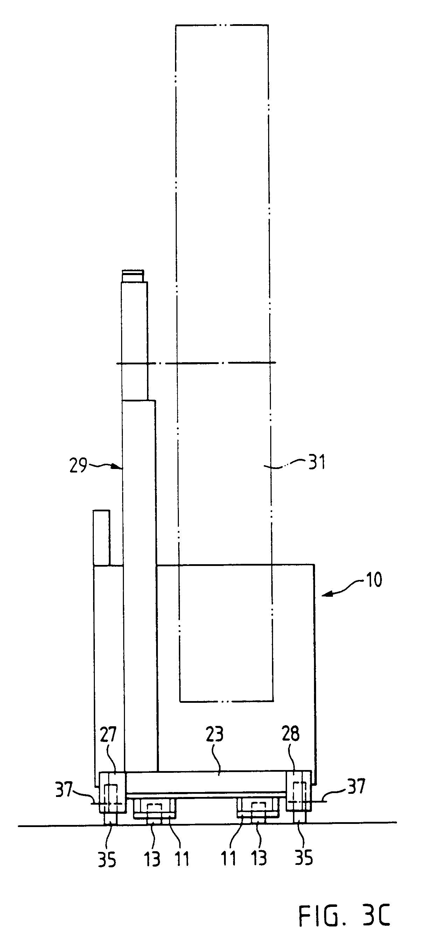

Ein weiteres Ausführungsbeispiel ist in den Figuren 3A bis 3C dargestellt. Für den Transport und das Handling von Druckproduktewickeln, wie sie heute in der Druckereibranche zur Zwischenlagerung etc. anfallen, werden spezielle Einrichtungen und verschiedenste Fahrzeuge eingesetzt. Da die hoch gelagerten und schweren Wickel sowohl hinsichtlich der Stabilität sowie dem grossen Gewicht Schwierigkeiten beim Handling bereiten, konnten herkömmliche Flurförderer nicht oder nur sehr beschränkt zu diesem Zweck eingesetzt werden. Durch Einsatz der erfindungsgemässen Vorrichtung ist es möglich, solche Wickel mit gewöhnlichen Pratzenfahrzeugen zu transportieren. Die Transportvorrichtung 21 weist einen Rahmen 22 mit Längsstreben 27, 28 und Querstreben 23-25 auf. Auf diesen Rahmen 22 ist eine hier nicht näher beschriebene Haltevorrichtung 29 für Druckproduktewickel 31 in bekannter Weise aufgebaut. Die Transportvorrichtung 21 ist von vier Rädern 35, 36 welche auf zwei Achsen 37, 38 bzw. vier entsprechenden Achsstummeln gelagert sind, getragen. Die Pratzen 11 des Pratzenfahrzeugs 10 sind unter der Transportvorrichtung 21 durchgeführt. Durch Anheben dieser Pratzen 11 wird der Rahmen 22 auf der gegen das Fahrzeug gerichteten Seite 42 angehoben, da das Hubelement, welches hier durch die Querstrebe 25 gebildet ist, tiefer liegt als die beiden anderen Querstreben 23, 24. Wie vor allem aus der Figur 3C ersichtlich ist, liegen die Bockrollen 13 des Pratzenfahrzeugs zwischen den beiden Rollen 35 der Transportvorrichtung, wobei deren Achsen nur geringfügig in horizontaler und vertikaler Richtung gegenüber den Achsen 37 versetzt sind. Um ein unerwünschtes Verschieben der Transportvorrichtung zu vermeiden kann eine Bremseinrichtung für ein oder mehrere der Rollen 35 oder 36 vorgesehen sein, die gelöst wird, sobald die Pratzen in Transportstellung angehoben werden bzw. die Rollen blockiert, sobald die Pratzen abgesenkt werden. Zur Stabilisierung der Haltevorrichtung 29 während dem Transport können am Pratzenfahrzeug Stützvorrichtungen 30 vorgesehen werden, welche aber beim normalen Einsatz des Pratzenfahrzeuges nicht hinderlich sind.

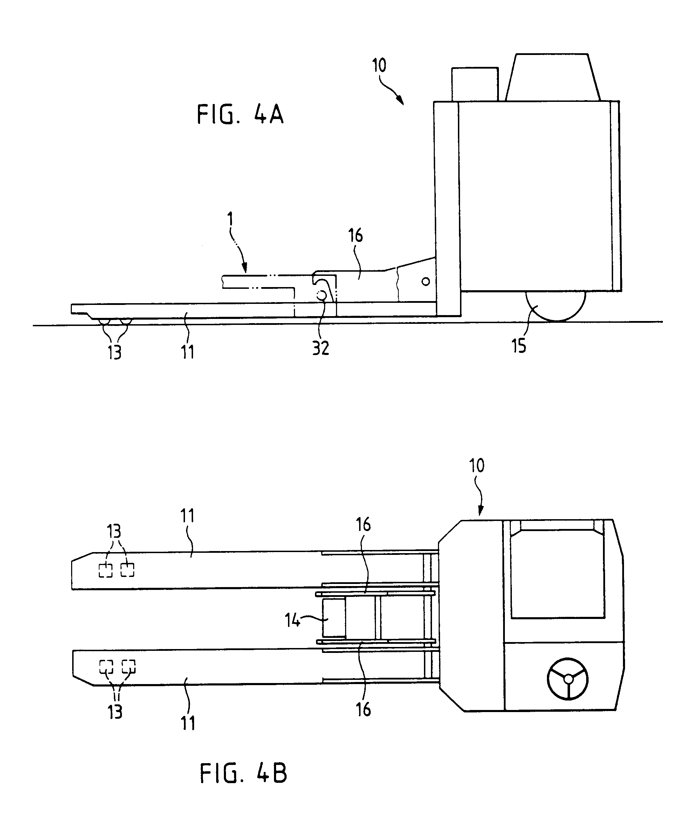

Ein Ausführungsvariante für einen Verriegelungsmechanismus ist in den Figuren 4A und 4B dargestellt. Dazu weist das Pratzenfahrzeug 10 zwischen den Pratzen 11 einen Palettenanschlag 14 auf. Ebenfalls zwischen den beiden Pratzen 11 sind zwei Greifarme 16 fest angeordnet. Zur Erhöhung der Stabilität können selbstverständlich auch über oder seitlich von den Pratzen zusätzliche Greifarme vorgesehen sein. Die Transportvorrichtung 1, welche in Figur 4A nur schematisch gestrichelt angedeutet ist, weist an ihrer gegen das Fahrzeug gerichteten Seite eine Querstange 32 oder andere Kupplungselemente auf. Diese kann bspw. auch durch die anhand der Figuren 3A bis 3C beschriebenen Querstrebe 25 gebildet sein. Das Transportfahrzeug wird mit den Pratzen unter die Transportvorrichtung gefahren und die Transportvorrichtung in Anschlag mit dem Palettenanschlag 14 gebracht. Durch Anheben der Transportvorrichtung mittels den Pratzen 11 kommt die Querstange 32 in Eingriff mit den Greifarmen 16, so dass die Transportvorrichtung bis zum erneuten Absenken nach den Transport fest mit dem Fahrzeug 10 gekoppelt ist. Durch dieses feste Koppeln der Transportvorrichtung mit dem Fahrzeug wird die Kippstabilität der Vorrichtung erhöht, da diese so zusammen mit dem Fahrzeug einen gemeinsamen, tiefliegenden Schwerpunkt aufweist.

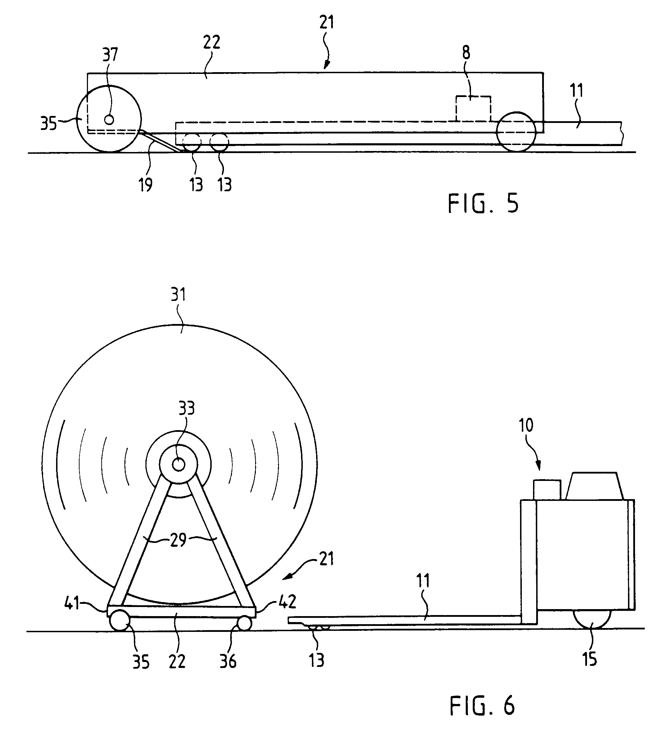

Eine weitere Ausführungsvariante der Erfindung ist in Figur 5 schematisch dargestellt. Bei den bisher beschriebenen Ausführungsvarianten ist die Last auf der Transportvorrichtung gleichzeitig auf die Lastrollen oder -räder 5, 35 und auf die Bockrollen 13 des Transportfahrzeugs sowie auch auf die Räder 15 des Fahrzeugs abgestützt.

Da ein Teil der Last auf den Bockrollen mit ihrem normalerweise relativ kleinen Durchmesser ruht, ist es Voraussetzung dass der Boden ziemlich eben ist. Besitzt dieser beispielsweise Schwellen oder andere Unebenheiten, so ist es vorteilhaft, wenn die Bockrollen entlastet sind. Gemäss Figur 5 besitzt die Transportvorrichtung 21 im Bereich der Lastachse 37 mindestens je eine Rampe 19 für die Bockrollen 13 der beiden Fahrzeugpratzen 11. Diese Rampe 19 ist starr oder gelenkig mit dem Rahmen 22 verbunden. Damit die Transportvorrichtung beim Einfahren der Pratzen nicht wegrollt ist vorzugsweise eine hier nicht näher dargestellte Radblockierung vorgesehen, welche erst gelöst wird, wenn die Pratzen 11 vollständig eingefahren sind. Eine Querstrebe 8 dient hier als Hubelement. Zur Verminderung der Reibung können an der Unterseite der Strebe 8 auch Rollen angebracht sein. Wie leicht ersichtlich ist, wird die Transportvorrichtung an ihrer rechten Seite angehoben, wenn die Bockrollen 13 den Rampen 19 entlang hochfahren. Indem die Vorrichtung angehoben wird, hebt sich auch die Rampe 19 ab und kann, falls nötig noch zusätzlich nach oben geschwenkt werden. Das ganze Gewicht ruht nun auf den Lasträdern 35 und den (hier nicht sichtbaren) Fahrzeugrädern, so dass die Achsen und Räder entsprechend dimensioniert sein müssen. Der grosse Raddurchmesser der Räder 35 erlaubt es, die Vorrichtung auch bei grösseren Bodenunebenheiten einzusetzen. In analoger Weise kann diese Transportvorrichtung auch zusammen mit einem Gabelstapler eingesetzt werden.

Figur 6 zeigt eine Ausführungsvariante der Vorrichtung zum Transport von zwei Druckproduktewickeln. Die günstige Gewichtsverteilung zwischen der Transportvorrichtung und dem Fahrzeug erlaubt es dieses relativ hohe Gesamtgewicht entsprechend dem erfindungsgemässen Verfahren zu bewegen. Die Transportvorrichtung 21 besitzt einen Rahmen 22 und vier seitliche Räder 35, 36. Ein Transportfahrzeug 10 steht bereit zum Einführen der Pratzen 11 unter die Vorrichtung. Eine Haltevorrichtung 29 für die Wickel 31 ist je im Bereich der Mitte der quer zur Transportrichtung stehenden Seiten 41, 42 abgestützt. Die Haltevorrichtung 29 besitzt seitlich zwei Halterungen 33, an welchen je ein Wickel festgehalten wird. Die beiden Wickel liegen bezüglich der Zeichnungsebenen hintereinander. Damit können zwei Wickel senkrecht und parallel zueinander mittels der Transportvorrichtung gleichzeitig bewegt werden. Wie ebenfalls aus der Zeichnung ersichtlich ist, ergibt sich durch diesen Aufbau eine sehr gute Fahrstabilität. Das Gesamtgewicht von Transportvorrichtung und Last ruht im dargestellten Zustand auf den vier Rädern 35, 36. Wird nun das Transportfahrzeug in Transportstellung gebracht, d.h. mit den Pratzen so weit unter die Transportvorrichtung 21 gefahren, dass die Bockrollen im Bereich der Räder 35 liegen und dann die Pratzen 11 angehoben, so ruht ein Teil des Gesamtgewichts auf den Pratzen. Wenn wie im vorliegenden Fall der Schwerpunkt der Last etwa im Bereich der Mitte der Transportvorrichtung ist, wird ca. die Hälfte des Gesamtgewichts auf den Pratzen abgestützt. Je näher der Auflagepunkt bei den Antriebsrädern 15 des Fahrzeugs 10 liegen, desto kleiner ist die Last, die durch die Bockrollen 13 abgestützt werden muss. Vorzugsweise sind die Längsseiten des Rahmens 22 so lang. dass bei erfindungsgemässer Ausrichtung von Bockrollenachsen und Transportlastachse das Hubelement bzw. der Auflagepunkt auf den Fahrzeugpratzen 11 im Bereich der Mitte zwischen den Bockrollen 13 und den Antriebsrädern 15 oder näher bei letzteren liegt, wobei man sich hierfür an Dimensionen handelsüblichen Pratzenfahrzeugen orientiert. Wie bei näherer Betrachtung leicht ersichtlich ist, tragen die Bockrollen beim Transport ca. 1/4 des Gesamtgewichtes. Diese gegenüber herkömmlichen Transportmöglichkeiten relativ kleine Belastung hat den Vorteil, dass ein nur geringer Rollwiderstand der Bockrollen auftritt und durch die Belastung der Antriebsräder eine grössere Adhäsion letzterer erzielt wird. Da die Transportvorrichtung 21 nur unwesentlich breiter ist als der Abstand der beiden Pratzen 11, können sehr enge Lagergassen befahren werden und beidseits der Vorrichtung Druckproduktewickel gehandhabt werden.

Die Erfindung ist selbstverständlich nicht auf die beschriebenen Ausführungsvarianten beschränkt, sondern entsprechend dem Erfindungsgedanken können sämtliche Vorrichtungen verwendet werden, welche beim Transport zusammen mit dem Fahrzeug einen Zweiachs-Charakter aufweisen, d.h. entweder nur eine Achse der Transportvorrichtung und eine Achse des Fahrzeugs oder eine zweite oder dritte Achse des Fahrzeugs (Bockrollen-Achsen) belastet sind, wobei im letzteren Falle diese zusätzlichen Achsen mindestens annähernd mit der Achslinie der belasteten Achse der Transportvorrichtung zusammenfallen müssen. Es ist offensichtlich, dass die Anordnung der Auflageelemente und der Räder oder Rollen stark variieren kann. Von grosser Wichtigkeit ist vor allem, dass der Zweiachscharakter erhalten bleibt, wobei mehrere Räder oder Rollen auf einer bzw. annähernd auf einer Achslinie liegen können. Im Ausführungsbeispiel nach den Figuren 3A bis 3C sind die bspw. 6 Rollen 13, 35 bei der einen und 2 Räder 15 bei der anderen Achse.

Eine weitere Ausführungsform enthält ein Hubelement, das seinerseits höhenverstellbar ist. Dazu wird bspw. eine einfache hydraulische Hebevorrichtung vorgesehen, so dass bei Vergrösserung des Hubes dieses Hubelementes der Rahmen der Transportvorrichtung an dieser Stelle gegenüber den Pratzen des Transportfahrzeugs angehoben wird. Diese Hubelement bildet vorzugsweise gleichzeitig eine Arretiereinrichtung gegenüber den Pratzen 11, indem bspw. Justierbohrungen oder Vertiefungen in den Pratzen vorgesehen werden. Auch diese Massnahme beeinträchtigt die Verwendung des Pratzenfahrzeuges für andere Zwecke in keiner Weise.

## Patentansprüche

1. Fahr- und lenkbare Transportkombination zum Transportieren von schweren Lasten, insbesondere zum Transportieren von Druckproduktewickeln in der Druckereibranche, bestehend aus einem an sich bekannten Fahrzeug mit mindestens einer lenkbaren Achse und mit Gabein oder Pratzen (11) und einer Transportvorrichtung (1, 21) mit einem Rahmen (2, 22) und einer auf der einen Seite (17, 41) des Rahmens angeordneten, starren Transportlastachse (6, 37) mit mindestens einem Rad oder einer Rolle (5, 35) an einer Achse oder an einem oder mehreren auf einer gemeinsamen Achslinie liegenden Achsstummeln, wobei der Rahmen der Transportvorrichtung von den Gabeln oder Pratzen des Fahrzeuges unterfahren und auf der der Transportlastachse gegenüberliegenden Seite (18, 42) angehoben ist, **dadurch gekennzeichnet**, dass das Fahrzeug an den Enden der Gabeln oder Pratzen starre Bockrollen (13) aufweist und dass der Rahmen der Transportvorrichtung von den Pratzen oder Gabeln des Fahrzeuges derart unterfahren und einseitig angehoben ist, dass die Achslinie der Bockrollen im unmittelbaren Bereiche der Transportlastachse und parallel zu dieser positioniert ist und dass der Rahmen der Transportvorrichtung auf der der Transportlastachse gegenüberliegenden Seite (18, 42) mit mindestens einem am Rahmen angeordneten Hubelement (8, 25), auf den Pratzen abgestützt ist.

2. Transportkombination nach Anspruch 1, **dadurch gekennzeichnet**, dass die Transportvorrichtung als rechteckige Palette ausgebildet ist und eine einzige Transportlastachse (6) mit zwei seitlichen Transportrollen (5) im Bereiche einer ersten Schmalseite (17) und parallel zu dieser verläuft und an der gegenüberliegenden Schmalseite (18) zwei im wesentlichen quaderförmige Hubelemente (8) fest an der Palette befestigt sind.

3. Transportkombination nach Anspruch 1, **dadurch gekennzeichnet**, dass die Transportvorrichtung einen im wesentlichen rechteckigen Rahmen (22) mit mindestens zwei Querstreben (23-25) aufweist, der vier je auf einem Achsstummel gelagerte Räder aufweist, wobei die Achslinie der Transportlasträder (35) im Bereich einer ersten Schmalseite (41) und parallel zu dieser verläuft und mindestens eine als Hubelement wirkende Querstrebe (25) im Bereich der zweiten Schmalseite (42) liegt, wobei diese Querstrebe (25) tiefer als die anderen Streben (23, 24) am Rahmen angebracht ist.

4. Transportkombination nach einem der Ansprüche 1 bis 3, **dadurch gekennzeichnet**, dass der Abstand zwischen der Transportlastachse (6, 37) der Transportvorrichtung und dem mindestens einen Hubelement (8, 25) mindestens halb so gross ist wie der Abstand zwischen der Achslinie der Bockrollen (13) und der Achse der Antriebsräder (15) des Transportfahrzeuges.

5. Transportkombination nach einem der Ansprüche 1 bis 4, **dadurch gekennzeichnet**, dass auf die Transportvorrichtung eine Haltevorrichtung (29) zum Halten eines Druckproduktewickels (31) aufgebaut ist.

6. Transportkombination nach Anspruch 5, **dadurch gekennzeichnet**, dass die Haltevorrichtung (29) zwei seitliche Halterungen (33) für zwei Druckproduktewickel aufweist, wobei diese Halterungen mindestens annähernd über der Mitte des Rahmens (22) liegen.

7. Transportkombination nach einem der Ansprüche 1 bis 6, **dadurch gekennzeichnet**, dass mindestens ein Hubelement (8, 25) der Transportvorrichtung höhenverstellbar ist.

8. Transportkombination nach einem der Ansprüche 1 bis 7, **dadurch gekennzeichnet**, dass im Bereich der Transportlastachse (6, 37) der Transportvorrichtung mindestens ein Sensor zur Bestimmung der Lage der Bockrollen vorgesehen ist.

9. Transportkombination nach einem der Ansprüche 1 bis 8, **dadurch gekennzeichnet**, dass die Transportlastachse (6, 36) der Transportvorrichtung und/oder die Transportrollen höhenverstellbar sind.

10. Transportkombination nach einem der Ansprüche 1 bis 9, **dadurch gekennzeichnet**, dass mindestens ein Rad oder eine Rolle der Transportvorrichtung (5, 35, 36) durch eine durch Einfahren der Pratzen (11) oder manuell gesteuerte, lösbare Sperreinrichtung blockierbar ist.

11. Transportkombination nach einem der Ansprüche 1 bis 10, **dadurch gekennzeichnet**, dass Kopplungs- oder Verriegelungsmittel (32) mit dem Rahmen (22) der Transportvorrichtung verbunden sind, welche mit Mitteln (16) an den Pratzen (11) des Transportfahrzeuges zusammenwirken und die Transportvorrichtung lösbar mit letzterem verbinden.

12. Transportkombination nach Anspruch 11, **dadurch gekennzeichnet**, dass im Bereiche der Hubelemente (8, 25) der Transportvorrichtung mindestens eine starre Kupplungsstange für die Kupplung mit dem Transportfahrzeug enthalten oder das Hubelement (8, 25) gleichzeitig als Kopplungsmittel (32) ausgestaltet ist.

13. Transportkombination nach einem der Ansprüche 1 bis 12, **dadurch gekennzeichnet**, dass im Bereich der Transportlastachse (37) eine Rampe für die Bockrollen (13) fest oder gelenkig mit dem Rahmen (22) verbunden ist.

14. Transportkombination nach einem der Ansprüche 1 bis 13, **dadurch gekennzeichnet**, dass die Transportvorrichtung einen Anschlag oder ein Justierelement aufweist, durch die ein weiteres Einfahren der Pratzen (11) unter die Transportvorrichtung verhindert wird, wenn die Achslinien der Bockrollen (13) mit der Transportlastachse (6, 37) der Transportvorrichtung ausgerichtet ist.

15. Transportkombination nach einem der Ansprüche 1 bis 13, **dadurch gekennzeichnet**, dass die Transportvorrichtung akustische oder optische Signalisierungsmittel aufweist, die beim Einfahren der Pratzen (11) unter die Transportvorrichtung aktiviert werden, wenn die Achslinien der Bockrollen (13) mit der Transportlastachse (6, 37) der Transportvorrichtung ausgerichtet ist.

16. Transportvorrichtung für eine Transportkombination nach einem der Ansprüche 1 bis 15 mit einem Rahmen (2, 22) und einer, auf einer Seite (17, 41) des Rahmens angeordneten Transportlastachse (5, 37) mit mindestens einem Rad oder einer Rolle (5, 25) an einer Achse oder an einem oder mehreren Achsstummeln mit einer gemeinsamen Achslinie, **dadurch gekennzeichnet**, dass die Transportlastachse starr ist, dass am Rahmen weitere Stützelemente (3, 4, 36) derart angebracht sind, dass der Rahmen von der der Transportlastachse gegenüberliegenden Seite (18, 42) mindestens bis zur Transportlastachse von Gabeln oder Pratzen (11) eines Fahrzeuges unterfahrbar ist, dass auf der der Transportlastachse gegenüberliegenden Seite (18, 42) des Rahmens zur Aufstützung auf die Gabeln oder Pratzen des Fahrzeuges mindestens ein Hubelement (8, 25) angebracht ist und dass auf dem Rahmen eine Haltevorrichtung (29) für mindestens einen Druckproduktewickel angeordnet ist.

17. Transportvorrichtung nach Anspruch 16, **dadurch gekennzeichnet**, dass der Rahmen (2) als rechteckige Palette ausgebildet ist, wobei im Bereiche der einen Schmalseite (17) der Palette die Achse oder Achslinie (6) mit zwei Rädern (5) oder Rollen angeordnet ist und im Bereiche der anderen Schmalseite (18) zwei im wesentlichen quaderförmige, fest mit der Palette verbundene Hubelemente (8) angeordnet sind.

18. Transportvorrichtung nach Anspruch 16, **dadurch gekennzeichnet**, dass der Rahmen (22) im wesentlichen rechteckig mit mindestens zwei Querstreben (23-25) ausgebildet ist, wobei im Bereiche der einen Schmalseite (41) mit einer zu dieser Schmalseite parallel verlaufenden gemeinsamen Achslinie (37) an Achsstummeln zwei Räder (35) oder Rollen angeordnet sind und im Bereiche der anderen Schmalseite (42) mit einer zur Achslinie (37) parallelen, weiteren Achslinie (38) zwei weitere Räder (36) oder Rollen angeordnet sind und eine im Bereiche der zweiten Achslinie (38) angeordnete Querstrebe (25), die tiefer am Rahmen (22) angebracht ist als die anderen Querstreben (23, 24), das Hubelement bildet.

19. Transportvorrichtung nach Anspruch 18, **dadurch gekennzeichnet**, dass die Haltevorrichtung (29) zwei seitliche Halterungen (33) für zwei Druckproduktewickel aufweist, wobei diese Halterungen mindestens annähernd über der Mitte des Rahmens (22) liegen.

20. Transportvorrichtung nach einem der Ansprüche 16 bis 19, **dadurch gekennzeichnet**, dass mindestens ein Hubelement (8, 25) höhenverstellbar ist.

21. Transportvorrichtung nach einem der Ansprüche 16 bis 20, **dadurch gekennzeichnet**, dass im Bereich der Achse oder Achslinie (6, 37) mindestens ein Sensor zur Bestimmung der Läge der Bockrollen (13) vorgesehen ist.

22. Transportvorrichtung nach einem der Ansprüche 16 bis 21, **dadurch gekennzeichnet**, dass die Achse (6) und/oder die Räder oder Rollen (5, 35) höhenverstellbar sind.

23. Transportvorrichtung nach einem der Ansprüche 16 bis 22, **dadurch gekennzeichnet**, dass mindestens ein Rad oder eine Rolle (5, 35, 36) im Ruhezustand durch eine durch Einfahren der Pratzen (11) oder manuell gesteuerte, lösbare Sperreinrichtung blockierbar ist.

24. Transportvorrichtung nach einem der Ansprüche 16 bis 23, **dadurch gekennzeichnet**, dass im Bereich des Hubelementes oder der Hubelemente (8, 25) mindestens eine starre Kupplungsstange für die Kupplung mit dem Transportfahrzeug enthalten oder das Hubelement bzw. die Hubelemente (8, 25) gleichzeitig als Koppelungsmittel (32) ausgestaltet sind.

25. Transportvorrichtung nach einem der Ansprüche 16 bis 24, **dadurch gekennzeichnet**, dass im Bereich der Achslinie (37) eine Rampe für die Bockrollen (13) fest oder gelenkig mit dem Rahmen (22) verbunden ist.

26. Verfahren zur Erstellung einer Transportkombination nach einem der Ansprüche 1 bis 15, **gekennzeichnet** durch folgende Verfahrensschritte:
a) Einfahren der Pratzen (11) eines Pratzenfahrzeuges (10) unter den Rahmen (2, 22) der Transportvorrichtung (1, 21) bis die Achsen der Bockrollen (13) mindestens annähernd auf der Achslinie der Rollen oder Räder (5, 35) der Transportlastachse (6, 37) liegen;
b) Anheben der Gabein oder Pratzen (11) und/oder Höhenverstellen der Hubelemente (8, 25), sodass die gegen das Transportfahrzeug (120) gerichtete Seite des Rahmens (2, 22) angehoben wird und gegenüber dem Boden einen Freiraum aufweist, wobei die Transportvorrichtung nur noch durch die Transportlastachse (6, 37) auf den Boden und mittles eines oder mehrerer Hubelemente (8, 25) auf die Pratzen (11) abgestützt ist.

27. Verfahren nach Anspruch 26, **dadurch gekennzeichnet**, dass die Transportvorrichtung mittels einer Kopplungs- oder Verriegelungseinrichtung an den Pratzen (11) vor, nach oder während dem Anheben der Vorrichtung lösbar eingerastet wird.

28. Verfahren nach einem der Ansprüche 26 oder 27, **dadurch gekennzeichnet**, dass durch einen Anschlag oder ein Justierelement das Einfahren der Gabein oder Pratzen unter die Transportvorrichtung (1, 21) begrenzt wird, sobald die Ausrichtung der Transportlastachse (6, 37) und der Achslinie der Bockrollen erfolgt ist.

29. Verfahren nach einem der Ansprüche 26 bis 28, **dadurch gekennzeichnet**, dass beim Einfahren der Gabein oder Pratzen (11) unter die Transportvorrichtung (1, 21) ein akustisches oder optisches Signal automatisch ausgelöst wird, sobald die Ausrichtung der Transportlastachse (6, 37) und der Achslinie der Bockrollen erfolgt ist.

## Claims

1. Movable and steerable transport combination for transporting heavy loads, particularly for transporting printed product reels in the printing sector, comprising a per se known vehicle with at least one steerable axle and with forks or claws (11) and a transporting means (1,21) having a frame (2,22) and on one side (17,41) of said frame a rigid transport load axle (6,37) with at least one wheel or roll (5,35) on an axle or on one or more axle journals located on a common axis, the vehicle forks or claws passing below the frame of the transporting means and said frame is raised on the side (18,42) opposite to the transport load axle, characterized in that at the ends of the forks or claws the vehicle has rigid support rolls (13) and that the forks or claws of the vehicle pass below the frame of the transporting means and raise same on one side in such a way that the axis of the support rolls is in the immediate vicinity of the transport load axle and parallel thereto and that the frame of the transporting means on the side (18,42) opposite to the transport load axle is supported on the claws with at least one lifting member (8,25) positioned on the frame.

2. Transport combination according to claim 1, characterized in that the transporting means is constructed as a rectangular pallet and a single transport load axle (6) with two lateral transport rolls (5) runs in the vicinity of a first narrow side (17) and parallel thereto and on the opposite narrow side (18) two substantially parallelepipedic lifting members (8) are fixed to the pallet.

3. Transport combination according to claim 1, characterized in that the transporting means has a substantially rectangular frame (22) with at least two cross-struts (23-25), which has four wheels in each case mounted on an axle journal, the axis of the transport load wheels (35) being in the vicinity of a first narrow side (41) and parallel thereto and at least one cross-strut (25) acting as a lifting member is positioned in the vicinity of the second narrow side (42), said cross-strut (25) being fitted to the frame lower than the other struts (23,24).

4. Transport combination according to one of the claims 1 to 3, characterized in that the distance between the transport load axle (6,37) of the transporting means and the at least one lifting member (8,25) is at least half as large as the distance between the axis of the support rolls (13) and the axis of the driving wheels (15) of the transportation vehicle.

5. Transport combination according to one of the claims 1 to 4, characterized in that on the transporting means is provided a holding device (29) for holding a printed product reel (31).

6. Transport combination according to claim 5, characterized in that the holding device (29) has two lateral fastenings (33) for two printed product reels, said fastenings being positioned at least approximately over the centre of the frame (22).

7. Transport combination according to one of the claims 1 to 6, characterized in that at least one lifting member (8,25) of the transporting means is vertically adjustable.

8. Transport combination according to one of the claims 1 to 7, characterized in that in the vicinity of the transport load axle (6,37) of the transporting means there is at least one sensor for determining the position of the support rolls.

9. Transport combination according to one of the claims 1 to 8, characterized in that the transport load axle (6,37) of the transporting means and/or the transport rolls are vertically adjustable.

10. Transport combination according to one of the claims 1 to 9, characterized in that at least one wheel or roll of the transporting means (5,35,36) is blockable by a detachable locking device, which is manually controlled or controlled by the insertion of claws (11).

11. Transport combination according to one of the claims 1 to 10, characterized in that coupling or locking means (32) are conneted to the frame (22) of the transporting means, which cooperate with means (16) on the claws (11) of the transportation vehicle and detachably connect the transporting means to the latter.

12. Transport combination according to claim 11, characterized in that in the vicinity of the lifting members (8,25) of the transporting means there is at least one rigid coupling rod for coupling to the transportation vehicle or the lifting member (8,25) is simultaneously constructed as a coupling means (32).

13. Transport combination according to one of the claims 1 to 12, characterized in that in the vicinity of the transport load axle (37) a ramp for the support rolls (13) is connected in fixed or articulated manner to the frame (22).

14. Transport combination according to one of the claims 1 to 13, characterized in that the transporting means has a stop or adjusting member, which prevents a further introduction of the claws (11) below the transporting means if the axis lines of the support rolls (13) are aligned with the transport load axles (6,37) of the transporting means.

15. Transport combination according to one of the claims 1 to 13, characterized in that the transporting means has acoustic or optical signalling means, which are activated when the claws (11) are introduced below the transporting means if the axis lines of the support rolls (13) are aligned with the transport load axle (6,37) of the transporting means.

16. Transporting means for a transport combination according to one of the claims 1 to 15 with a frame (2,22) and a transport load axle (5,37), placed on one side (17,41) of the frame and having at least one wheel or roll (5,25) on an axle or on one or more axle journals with a common axis line, characterized in that the transport load axle is rigid, that on the frame are fitted further support elements (3,4,36) in such a way that from the side (18,42) opposite to the transport load axle, the forks or claws (11) of a vehicle can pass below the frame at least up to said transport load axle, that on the side (18, 42) of the frame opposite to the transport load axle is fitted at least one lifting member (8,25) for supporting on the forks or claws of the vehicle and that on the frame is provided a holding device (29) for at least one printed product reel.

17. Transporting means according to claim 16, characterized in that the frame (2) is constructed as a rectangular pallet and in the vicinity of one narrow side (17) of the pallet the axis or axis line (6) with two wheels (5) or rolls is provided and in the vicinity of the other narrow side (18) there are two substantially parallelepipedic lifting members (8) fixed to the pallet.

18. Transporting means according to claim 16, characterized in that the frame (22) is substantially rectangular with at least two cross-struts (23-25) and in the vicinity of the narrow side (41) there are two wheels (35) or rolls on axle journals with a common axis line (37) parallel to said narrow side and in the vicinity of the other narrow side (42) there are two further wheels (36) or rolls with a further axis line (38) parallel to the axis line (37) and a cross-strut (25) located in the vicinity of the second axis line (38), which is fitted lower to the frame (22) than the other cross-struts (23,24) and forms the lifting member.

19. Transporting means according to claim 18, characterized in that the holding device (29) has two lateral fastenings (33) for two printed product reels, said fastenings being at least approximately located over the centre of the frame (22).

20. Transporting means according to one of the claims 16 to 19, characterized in that at least one lifting member (8,25) is vertically adjustable.

21. Transporting means according to one of the claims 16 to 20, characterized in that in the vicinity of the axis or axis line (6,37) is provided at least one sensor for determining the position of the support rolls (13).

22. Transporting means according to one of the claims 16 to 21, characterized in that the axle (6) and/or the wheels or rolls (5,35) are vertically adjustable.

23. Transporting means according to one of the claims 16 to 22, characterized in that at least one wheel or roll (5,35,36) in the inoperative state is blockable by a detachable locking device controlled manually or by the introduction of the claws (11).

24. Transporting means according to one of the claims 16 to 23, characterized in that in the vicinity of the lifting member or members (8,25) there is at least one rigid coupling rod for coupling to the transportation vehicle or the lifting member or members (8,25) are simultaneously constructed as coupling means (32).

25. Transporting means according to one of the claims 16 to 24, characterized in that in the vicinity of the axis line (37) a ramp for the support rolls (13) is connected in fixed or articulated manner to the frame (22).

26. Method for producing a transport combination according to one of the claims 1 to 15, characterized by the following method steps:
a) introducing the claws (11) of a claw vehicle (10) under the frame (2, 22) of the transporting means (1, 21) up to the spindles of the support rolls (13) at least approximately up to the axis line of the rolls or wheels (5, 35) of the transport load axle (6, 37);
b) raising the forks or claws (11) and/or vertical adjustment of the lifting members (8, 25), so as to raise the side of the frame (2, 22) directed against the transportation vehicle (120) and give it a clearance relative to the ground, the transporting means only being supported by the transport load axle (6, 37) on the ground and by means of one or more lifting members (8, 25) on the claws (11).

27. Method according to claim 26, characterized in that the transporting means is detachably secured by means of a coupling or locking device on the claws (11) before, after or during the raising of the means.

28. Method according to one of the claims 26 or 27, characterized in that the insertion of the forks or claws below the transporting means (1, 21) is limited by a stop or adjusting member, as soon as the alignment of the transport load axle (6, 37) and the axis line of the support rolls has taken place.

29. Method according to one of the claims 26 to 28, characterized in that on introducing the forks or claws (11) below the transporting means (1, 21) an acoustic or optical signal is automatically emitted as soon as the transport load axle (6, 37) and the axis of the support rolls are aligned.

## Revendications

1. Combinaison mobile et orientable pour le transport de charges lourdes, en particulier pour le transport de rouleaux de produits imprimés dans le secteur de l'imprimerie, composée d'un véhicule connu en soi avec au moins un essieu orientable et avec des fourches ou des griffes (11) et d'un dispositif de transport (1, 21) avec un bâti (2, 22) et un essieu de charge de transport (6, 37) rigide disposé sur un côté (17, 41) du bâti avec au moins une roue ou un galet (5, 35) sur un essieu ou sur une ou plusieurs fusées d'essieu situées sur une ligne d'axe commune, le bâti du dispositif de transport étant pris par en-dessous par les fourches ou les griffes et levé du côté (18, 42) opposé à l'axe de charge de transport, caractérisée en ce que le véhicule présente aux extrémités des fourches ou des griffes des fourches fixes (13) et en ce que le bâti du dispositif de transport est pris par en-dessous et levé d'un côté par les griffes ou les fourches du véhicule de telle sorte que la ligne d'axe des fourches fixes soit positionnée à proximité immédiate de l'axe de charge de transport et parallèlement à celui-ci et que le bâti du dispositif de transport soit soutenu sur les griffes sur le côté (18, 42) opposé à l'axe de charge de transport par au moins un élément de levage (8, 25) disposé sur le bâti.

2. Combinaison de transport selon la revendication 1, caractérisée en ce que le dispositif de transport est conçu comme une palette rectangulaire et un seul axe de charge de transport (6) avec deux galets de transport (5) latéraux se trouve dans le secteur d'un premier petit côté (17) et parallèlement à celui-ci et deux éléments de levage (8) sensiblement carrés sont fixés à la palette sur le petit côté (18) opposé.

3. Combinaison de transport selon la revendication 1, caractérisée en ce que le dispositif de transport présente un bâti (22) sensiblement orthogonal avec au moins deux traverses (23-25), qui présente quatre roues supportées chacune sur une fusée d'essieu, la ligne d'axe des roues de charge de transport (35) passant dans le secteur d'un premier petit côté (41) et parallèlement à celui-ci et au moins une traverse (25) servant d'élément de levage se trouvant dans le secteur du second petit côté (42), cette traverse (25) étant disposée sur le bâti plus bas que les autres traverses (23, 24).

4. Combinaison de transport selon l'une ou l'ensemble des revendications 1 à 3, caractérisée en ce que l'écart entre l'axe de charge de transport (6, 37) du dispositif de transport et l'élément de levage (8, 25) au nombre d'un au moins est égal à la moitié au moins de l'écart entre la ligne d'axe des fourches fixes (13) et l'essieu des roues motrices (15) du véhicule de transport.

5. Combinaison de transport selon l'une ou l'ensemble des revendications 1 à 4, caractérisée en ce qu'un dispositif de maintien (29) est monté sur le dispositif de transport pour le maintien d'un rouleau de produits imprimés (31).

6. Combinaison de transport selon la revendication 5, caractérisée en ce que le dispositif de maintien (29) présente deux fixations (33) latérales pour deux rouleaux de produits imprimés, ces fixations se trouvant approximativement au-dessus du milieu du bâti (22).

7. Combinaison de transport selon l'une ou l'ensemble des revendications 1 à 6, caractérisée en ce qu'au moins un élément de levage (8, 25) du dispositif de transport est réglable en hauteur.

8. Combinaison de transport selon l'une ou l'ensemble des revendications 1 à 7, caractérisée en ce qu'au moins un capteur destiné à déterminer la position des fourches fixes est prévu dans le secteur de l'axe de charge de transport (6, 37).

9. Combinaison de transport selon l'une ou l'ensemble des revendications 1 à 8, caractérisée en ce que l'axe de charge de transport (6, 36) du dispositif de transport et/ou les galets de transport sont réglables en hauteur.

10. Combinaison de transport selon l'une ou l'ensemble des revendications 1 à 9, caractérisée en ce qu'au moins une roue ou un galet du dispositif de transport (5, 35, 36) peuvent être bloqués par un dispositif de verrouillage pouvant être desserré, commandé par la rétraction des griffes (11) ou manuellement.

11. Combinaison de transport selon l'une ou l'ensemble des revendications 1 à 10, caractérisée en ce que des moyens de couplage ou de verrouillage (32) sont reliés avec le bâti (22) du dispositif de transport qui coopèrent avec des moyens (16) sur les griffes (11) du véhicule de transport et relient le dispositif de transport avec ce dernier de manière amovible.

12. Combinaison de transport selon la revendication 11, caractérisée en ce qu'au moins une barre de couplage fixe est contenue dans le secteur des éléments de levage (8, 25) du dispositif de transport pour le couplage avec le véhicule de transport ou que l'élément de levage (8, 25) est en même temps conçu comme moyen de couplage (32).

13. Combinaison de transport selon l'une ou l'ensemble des revendications 1 à 12, caractérisée en ce qu'une rampe pour les fourches fixes (13) est reliée de façon fixe ou articulée au bâti (22) dans le secteur de l'axe de charge de transport (37).

14. Combinaison de transport selon l'une ou l'ensemble des revendications 1 à 13, caractérisée en ce que le dispositif de transport présente une butée ou un élément d'ajustement, qui empêche d'introduire davantage les griffes (11) sous le dispositif de transport lorsque les lignes d'axe des fourches fixes (13) sont mises en place par rapport à l'axe de charge de transport (6, 37) du dispositif de transport.

15. Combinaison de transport selon l'une ou l'ensemble des revendications 1 à 13, caractérisée en ce que le dispositif de transport présente des moyens de signalisation acoustiques ou optiques, qui sont activés lorsque les griffes (11) sont passées sous le dispositif de transport, lorsque les lignes d'axe des fourches fixes (13) sont mises en place par rapport à l'axe de charge de transport (6, 37) du dispositif de transport.

16. Dispositif de transport pour une combinaison de transport selon l'une ou l'ensemble des revendications 1 à 15 avec un bâti (2, 22) et un axe de charge de transport (5, 37) disposé sur un côté (17, 41) du bâti avec au moins une roue ou un galet (5, 25) sur un essieu ou sur une ou plusieurs fusées d'essieu avec une ligne d'axe commune, caractérisé en ce que l'axe de charge de transport est fixe, en ce que d'autres éléments d'appui (3, 4, 36) sont disposés sur le bâti de telle sorte que le bâti puisse être pris par en-dessous par des fourches ou des griffes (11) d'un véhicule sur le côté (18, 42) opposé à l'axe de charge de transport au moins jusqu'à l'axe de charge de transport, en ce qu'au moins un élément de levage (8, 25) est disposé du côté (18, 42) du bâti opposé à l'axe de charge de transport pour l'appui sur les fourches ou les griffes du véhicule et en ce qu'un dispositif de maintien (29) pour au moins un rouleau de produits imprimés est disposé sur le bâti.

17. Dispositif de transport selon la revendication 16, caractérisé en ce que le bâti (2) est conçu comme une palette rectangulaire, l'essieu ou la ligne d'axe (6) avec deux roues (5) ou galets étant disposé dans le secteur de l'un (17) des petits côtés de la palette et deux éléments de levage (8) sensiblement carrés fixés à la palette étant disposés dans le secteur de l'autre petit côté (18).

18. Dispositif de transport selon la revendication 16, caractérisé en ce que le bâti (22) est sensiblement rectangulaire avec au moins deux traverses (23-25), deux roues (35) ou galets étant disposés sur des fusées d'essieu dans le secteur de l'un (41) des petits côtés avec une ligne d'axe (37) commune parallèle à ce petit côté et deux autres roues (36) ou galets étant disposés dans le secteur de l'autre petit côté (42) avec une autre ligne d'axe (38) parallèle à la ligne d'axe (37) et une traverse (25), disposée plus bas sur le bâti (22) que les autres traverses (23, 24) dans le secteur de la seconde ligne d'axe (38) formant l'élément de levage.

19. Dispositif de transport selon la revendication 18, caractérisé en ce que le dispositif de maintien (29) présente deux fixations (33) latérales pour deux rouleaux de produits imprimés, ces fixations se trouvant au moins approximativement au-dessus du milieu du bâti (22).

20. Dispositif de transport selon l'une ou l'ensemble des revendications 16 à 19, caractérisé en ce qu'au moins un élément de levage (8, 25) est réglable en hauteur.

21. Dispositif de transport selon l'une ou l'ensemble des revendications 16 à 20, caractérisé en ce qu'au moins un capteur est prévu dans le secteur de l'essieu ou de la ligne d'axe (6, 37) pour déterminer la position des fourches fixes (13).

22. Dispositif de transport selon l'une ou l'ensemble des revendications 16 à 21, caractérisé en ce que l'essieu (6) et/ou les roues ou les galets (5, 35) sont réglables en hauteur.

23. Dispositif de transport selon l'une ou l'ensemble des revendications 16 à 22, caractérisé en ce qu'au moins une roue ou un galet (5, 35, 36) peuvent être bloqués au repos par un dispositif de verrouillage pouvant être desserré, commandé par la rétraction des griffes (11) ou manuellement.

24. Dispositif de transport selon l'une ou l'ensemble des revendications 16 à 23, caractérisé en ce qu'au moins une barre de couplage fixe pour le couplage avec le véhicule de transport est contenue dans le secteur de l'élément de levage ou des éléments de levage (8, 25) ou l'élément de levage ou les éléments de levage (8, 25) sont en même temps conçus comme des moyens de couplage (32).

25. Dispositif de transport selon l'une ou l'ensemble des revendications 16 à 24, caractérisé en ce qu'une rampe pour les fourches fixes (13) est reliée de façon fixe ou articulée au bâti (22) dans le secteur de la ligne d'axe (37).

26. Procédé pour la création d'une combinaison de transport selon l'une ou l'ensemble des revendications 1 à 15, caractérisé en ce qu'il comporte les étapes suivantes :
a) introduction des griffes (11) d'un véhicule à griffes (10) sous le bâti (2, 22) du dispositif de transport (1, 21) jusqu'à ce que les axes des fourches fixes (13) se trouvent au moins approximativement sur la ligne d'axe des galets ou des roues (5, 35) de axe de charge de transport (6, 37) ;
b) levage des fourches ou des griffes (11) et/ou réglage en hauteur des éléments de levage (8, 25), de telle sorte que le côté du bâti (2, 22) orienté vers le véhicule de transport (120) soit levé et présente vis-à-vis du sol un espace libre, le dispositif de transport n'étant plus soutenu que par l'axe de charge de transport (6, 37 ) sur le sol et au moyen d'un ou plusieurs éléments de levage (8, 25) sur les griffes (11).

27. Procédé selon la revendication 26, caractérisé en ce que le dispositif de transport est engagé de façon amovible sur les griffes (11) avant, après ou pendant le levage du dispositif au moyen d'un dispositif de couplage ou de verrouillage.

28. Procédé selon l'une ou l'ensemble des revendications 26 ou 27, caractérisé en ce qu'une butée ou un élément d'ajustement limite l'introduction des fourches ou des griffes sous le dispositif de transport (1, 21) dès que la mise en place l'un par rapport à l'autre de l'axe de charge de transport (6, 37) et de la ligne d'axe des fourches fixes est terminée.

29. Procédé selon l'une ou l'ensemble des revendications 26 à 28, caractérisé en ce que lors de l'introduction des fourches ou des griffes (11) sous le dispositif de transport (1, 21) un signal acoustique ou optique est automatiquement déclenché dès que la mise en place l'un par rapport à l'autre de l'axe de charge de transport (6, 37) et de la ligne d'axe des fourches fixes est terminée.
